**Europäisches Patentamt**

**European Patent Office**

**Office européen des brevets**

(19)

(11) Veröffentlichungsnummer: **0 120 335**
**B1**

(12)

# EUROPÄISCHE PATENTSCHRIFT

(45) Veröffentlichungstag der Patentschrift:
19.07.89

(21) Anmeldenummer: **84102146.2**

(22) Anmeldetag: **29.02.84**

(51) Int. Cl.⁴: **G 01 S 7/52, G 01 S 7/62**

(54) **Verfahren und Vorrichtung zur Darstellung von in Polarkoordinaten anfallenden Signalinformationen.**

(30) Priorität: 14.03.83 DE 3308995

(43) Veröffentlichungstag der Anmeldung:
03.10.84 Patentblatt 84/40

(45) Bekanntmachung des Hinweises auf die Patenterteilung: 19.07.89 Patentblatt 89/29

(84) Benannte Vertragsstaaten:
**AT DE FR GB NL**

(56) Entgegenhaltungen:
**EP-A- 0 018 518**
**EP-A- 0 067 316**
**FR-A- 2 310 608**
**FR-A- 2 531 783**
**GB-A- 2 070 823**
**Die Akte enthält technische Angaben, die nach dem Eingang der Anmeldung eingereicht wurden und die nicht in dieser Patentschrift enthalten sind.**

(73) Patentinhaber: **Siemens Aktiengesellschaft Berlin und München**
**Wittelsbacherplatz 2**
**D-8000 München 2 (DE)**

(72) Erfinder: **Birk, Adalbert**
**Kulmbacherstrasse 51**
**D-8520 Erlangen (DE)**

**Beschreibung**

Die Erfindung bezieht sich auf ein Verfahren zur Darstellung von in Polarkoordinaten anfallenden, mittels eines Sektor-Scan-Verfahrens gewonnenen Ultraschall-Echosignalen, die mittels mehrerer zweidimensionaler Bildspeicher zwischengespeichert und von dort zur fernsehnormgerechten Darstellung auf einen Monitor ausgelesen werden, wobei jeder zweidimensionale Bildspeicher eine Speichermatrix zur Aufnahme eines kompletten Ultraschall-Echobildes enthält. Die Erfindung bezieht sich auch auf eine Vorrichtung zur Durchführung des Verfahrens.

Bei den Ultraschall-Sektor-Scan-Verfahren ist es erwünscht, die in Form von « Vektoren » erzeugte Bildinformation als zusammenhängendes Bild auf dem Bildschirm eines Fernsehmonitors wiederzugeben. Als « Vektor » wird hierbei die nach Aussenden eines Ultraschallimpulses entlang einer Ultraschallzeile empfangene Echoinformation verstanden. Für verschiedene Abtastzeitpunkte ergeben sich beim Sektor-Scan-Verfahren — ausgehend von einem gemeinsamen Ursprungspunkt — verschiedene Winkelrichtungen für die Vektoren. Für eine fernsehnormgerechte, sogenannte « Echt-Zeit-Wiedergabe » (« real time ») im Sinne der Ultraschalltechnik ist es dabei notwendig, einen sogenannten Scan-Konverter mit Zwischenspeicher zu verwenden. Ein Scan-Konverter wandelt den Ultraschall-Scan in ein fernsehnormgerechtes Wiedergabesignal um, das auf einem Monitor darstellbar ist.

Zur Darstellung von Ultraschallschnittbildern in Fernsehnorm ist es also notwendig, die erzeugten Bilder vor ihrer Darstellung auf dem Fernsehmonitor in einem oder in mehreren Zwischenspeichern zwischenzuspeichern. Dabei wird in realisierten Geräten üblicherweise ein einziger zweidimensionaler Bildspeicher in Verbindung mit einem vorgeschalteten eindimensionalen « Vektorspeicher » oder Vertikalspeicher und mit einem nachgeschalteten eindimensionalen Horizontal- oder Fernsehzeilenspeicher verwendet. Der Vektor- und der Horizontalspeicher werden dabei im allgemeinen jeweils nach dem Wechselpufferverfahren betrieben.

Nachteilig bei einem solchen Speicherverfahren, das einen einzigen zweidimensionalen Bildspeicher verwendet, dessen Speichermatrix zur Aufnahme eines kompletten Ultraschall-Echobildes eingereichtet ist, ist die Tatsache, daß das auf dem Monitor dargestellte Sichtbild aus mindestens zwei zeitlich nacheinanderliegenden Ultraschall-Scans resultiert. Das bedeutet, daß Bewegungen des untersuchten Objektes zu unterschiedlichen Zeitpunkten erfaßt werden und daß deshalb das Objekt oder Teile desselben gemäß ihrer Bewegung an unterschiedlichen Orten des Bildschirmes dargestellt werden können (Bildartefakte). Mit anderen Worten : Bei Bewegungen des Objektes, z. B. des menschlichen Herzens oder anderer Strukturen im medizinischen Bereich, kann das Objekt-Bild auf dem Bildschirm hin- und herspringen. Weiterhin wird als nachteilig angesehen, daß auf dem Bildschirm eine sichelförmige Trennlinie, die das neue von dem vorangehenden Bild trennt, normalerweise nicht wahrgenommen wird. Dadurch können bei der Beurteilung eines bewegten Vorganges oder eines Objektes, das Bewegungen unterworfen ist, Fehlinterpretationen auftreten. Dies ist besonders im medizinischen Bereich von erheblichem Nachteil.

Aus der DE-C-29 10 410 ist ein Verfahren zur Echtzeit-Darstellung von in Polarkoordinaten anfallenden, mittels eines Sektor-Scan-Verfahrens gewonnenen Ultraschall-Echosignalen, die mittels eines ersten und zweiten zweidimensionalen Bildspeichers geometrisch korrekt zwischengespeichert und von dort unter Umwandlung in ein fernsehnormgerechtes Wiedergabesignal abwechselnd zur Darstellung auf einem Monitor ausgelesen werden, bekannt. Der erste zweidimensionale Bildspeicher enthält eine Speichermatrix zur Aufnahme eines kompletten Ultraschall-Echobildes. Auch der zweite gleichartige zweidimensionale Bildspeicher enthält eine zweite Speichermatrix ebenfalls zur Aufnahme eines kompletten Ultraschall-Echobildes. Die Ultraschall-Echosignale werden abwechselnd den beiden zweidimensionalen Bildspeichern in solcher Weise zugeführt, daß wechselweise jeweils ein komplettes Ultraschall-Echobild in den ersten und den zweiten Bildspeicher geometrisch korrekt eingeschrieben wird. Gleichzeitig mit der Einschreibung eines Echobildes in den einen der Bildspeicher wird das in dem jeweils anderen Bildspeicher gespeicherte komplette Ultraschall-Echobild auf den Monitor fernsehnormgerecht ausgelesen. Bei dem bekannten Verfahren und der bekannten Vorrichtung ist eine Bildverarbeitung während des Real-Time-Betriebes, mit der sich die Bildqualität steigern ließe, nicht möglich.

In zeitgemäßer Technologie wird üblicherweise mit digitalen Halbleiterspeichern gearbeitet. Aus der US-PS 4 245 250 ist ein Scan-Konverter für einen Ultraschall-Sektor-Scanner bekannt, der das Erreichen einer möglichst hohen Bildwechselfrequenz zum Ziel hat. Dabei werden die von dem Sektor-Scanner (« Phased Array ») erzeugten Scanlinien mit unterschiedlicher Frequenz abgetastet. Die so entlang einer Abtastzeile akquirierten Ultraschall-Echosignale oder Abtastdaten werden in einen von vier Hauptspeichern eingeschrieben. Vorgeschaltete Verzögerungsglieder wirken als Zwischenspeicher. Jeder der zweidimensional ausgeführten Hauptspeicher ist zur Aufnahme eines Viertels des kompletten Ultraschall-Echobildes eingerichtet. Durch Anwendung der variablen Frequenz bei der Abtastung wird beim Einschreiben in die Hauptspeicher eine « Datenreduktion » vorgenommen.

Der vorliegenden Erfindung liegt die Aufgabe zugrunde, ein Verfahren zur Darstellung von Ultraschall-Echosignalen anzugeben, bei dem grobe Bewegungsartaefakte der erwähnten Art vermieden werden und bei dem während der Datenakquisition eine Bildverarbeitung möglich ist. Weiterhin soll eine Vorrichtung zur Durchführung des Verfahrens angegeben werden.

Die Aufgabe wird erfindungsgemäß gelöst durch ein Verfahren zur Echtzeit-Darstellung von in Polarkoordinaten anfallenden, mittels einer Sektor-Scan-Technik gewonnenen Ultraschall-Echosignalen, bei dem die Echosignale jeweils einem von mindestens drei zweidimensionalen Bildspeichern in solcher Weise zugeführt werden, daß die einzelnen Bildspeicher der Reihe nach jeweils mit einem kompletten, geometrisch korrekten Ultraschall-Echobild des abgetasteten Sektors beschrieben werden, bei dem weiter gleichzeitig mit der Einschreibung eines Ultraschall-Echobildes in einen der Bildspeicher das in einem der anderen Bildspeicher enthaltene Ultraschall-Echobild auf einen Monitor fernsehnormgerecht ausgelesen wird, während die in den übrigen Bildspeichern enthaltenen Ultraschall-Echobilder mittels einer Signalverarbeitungseinrichtung verarbeitet werden, und bei dem die Rollen der Bildspeicher zyklisch vertauscht werden.

Eine Vorrichtung zur Durchführung des Verfahrens ist nach der DE-C-29 12 410 ausgestattet mit einem Ultraschall-Sende- und Empfangssystem, mit einer Einheit zur Sektor-Scan-Steuerung, mit einem Analog-Digital-Wandler zur Umsetzung der von dem Ultraschall-Sende- und Empfangssystem gelieferten Echosignale in digitale Bildsignale, mit einem ersten und einem zweiten Bildspeicher mit je einer Speichermatrix, die zur Aufnahme der digitalen Bildsignale eines kompletten Ultraschall-Echobildes eingerichtet sind, mit einem Digital-Analog-Wandler zur Umsetzung der gespeicherten digitalen Bildsignale in analoge Bildsignale, mit einem an den Digital-Analog-Wandler angeschlossenen Monitor zur Darstellung der gespeicherten Bildsignale in einem Ultraschall-Echobild, und mit den Bildspeichern zugeordneten Adreßsteuereinheiten. Sie zeichnet sich erfindungsgemäß dadurch aus,

daß ein weiterer zweidimensionaler Bildspeicher vorgesehen ist, der ebenfalls eine Speichermatrix zur Aufnahme eines kompletten Ultraschall-Echobildes sowie eine Adreßsteuereinheit aufweist,

daß eine Signalverarbeitungsvorrichtung vorgesehen ist,

daß die Bildspeicher eingangsseitig über einen ersten Demultiplexer mit dem Ausgang des Analog-Digital-Wandlers und weiterhin ausgangsseitig zum einen über einen ersten Multiplexer mit dem Monitor und zum anderen über einen zweiten Multiplexer mit der Signalverarbeitungseinrichtung verbunden sind,

daß jeder Bildspeicher von jeder Adreßsteuereinheit über jeweils einen jeder Adreßsteuereinheit zugeordneten zweiten Demultiplexer adressierbar ist, und

daß eine zentrale Steuereinheit vorgesehen ist, über die die Adreßsteuereinheiten, die Demultiplexer und die Multiplexer so gesteuert sind, daß in jeweils einen der Bildspeicher ein komplettes Ultraschall-Echobild eingespeichert wird, während gleichzeitig das in einem der beiden übrigen Bildspeicher enthaltene Echobild auf den Monitor ausgelesen wird und das in dem anderen der beiden übrigen Bildspeicher enthaltene Echobild der Signalverarbeitungseinrichtung zugeführt wird, wobei die Rollen der Bildspeicher zyklisch vertauscht werden.

Bei der Erfindung werden zwar jeweils vollständige, zweidimensionale, schnelle Bildspeicher benötigt. Insgesamt ergibt sich aber gegenüber den früher realisierten Geräten eine wesentliche Vereinfachung des Abbildungsverfahrens sowie der zugehörigen Vorrichtung, insbesondere im Hinblick auf die Steuerung. Auch Bauelemente können eingespart werden. Besonders vorteilhaft ist, daß es möglich ist, jeweils vollständige Ultraschall-Sektor-Scans im Fernsehbild darzustellen; damit ist die erwähnte sichelförmige Aufteilung des Bildes in Teilbilder, die zu unterschiedlichen Zeitpunkten akquiriert wurden, vermieden. Folglich sind auch die angeführten, erheblich störenden Bewegungsartefakte eliminiert.

Die Verwendung des dritten kompletten zweidimensionalen Bildspeichers ergibt die Möglichkeit der unabhängigen Bildverarbeitung. Die drei Bildspeicher arbeiten dabei zyklisch vertauschbar in der Weise arbeiten, daß jeweils ein Bildspeicher beschrieben und ein anderer ausgelesen wird, und daß gleichzeitig der Inhalt des dritten Bildspeichers zur Bildverarbeitung herangezogen wird. Das bei der Bildverarbeitung gewonnene modifizierte Echobild kann dabei wieder in den jeweils dritten Bildspeicher zurückübertragen werden. Bei Bedarf können auch mehr als drei Bildspeicher vorhanden sein. Einer dieser Bildspeicher kann dabei als ein Mittel eingesetzt werden, das über einen längeren Zeitraum hinweg ein komplettes Ultraschallbild z. B. zu Vergleichszwecken speichert.

Die vorliegende Problemlösung ist mit vertretbarem Aufwand möglich, weil heutzutage für die Bildspeicher Speicherbausteine ausreichend hoher Geschwindigkeit und Kapazität zu akzeptablen Preisen zur Verfügung stehen. Durch Einsatz dieser Speicherbausteine, die auf dem Markt in hochintegrierter Form erhältlich sind, kann gänzlich auf die bisher notwendigen eindimensionalen Vektor- und Horizontalspeicher sowie auf Steuereinrichtungen hierfür verzichtet werden.

Es soll noch betont werden, daß sich das gekennzeichnete Verfahren auch für Ultraschall-Einrichtungen einsetzen läßt, die nach dem Parallel-Scan-Verfahren arbeiten. Bevorzugt wird es bei einer Ultraschall-Einrichtung realisiert, die auch oder in der Hauptsache für Sektor-Scan-Abtastungen eingerichtet ist.

Weitere Vorteile und Einzelheiten der Erfindung ergeben sich aus der nachfolgenden Figurenbeschreibung von Ausführungsbeispielen anhand der Zeichnung in Verbindung mit den Unteransprüchen.

Es zeigen:

Fig. 1 eine schematische Darstellung zur Erläuterung eines Speicherverfahrens nach dem Stand der Technik,

Fig. 2 eine Darstellung des resultierenen Ultraschall-Echobildes nach dem Stand der Technik, das aus zwei zu unterschiedlichen Zeitpunkten akquirierten Teilbildern besteht,

Fig. 3 eine Darstellung entsprechend Figur 2 mit einem Bewegungsartefakt,

Fig. 4 eine schematische Darstellung zur Erläuterung des Speicherverfahrens nach dem Wechselpuffer-Prinzip mit zwei Bildspeichern,

Fig. 5 ein Blockschaltbild eines ersten Scan-Konverters, der mit zwei Bildspeichern nach dem Wechselpuffer-Prinzip arbeitet, und

Fig. 6 ein Blockschaltbild eines zweiten Scan-Konverters, der nach dem erfindungsgemäßen Verfahren arbeitet.

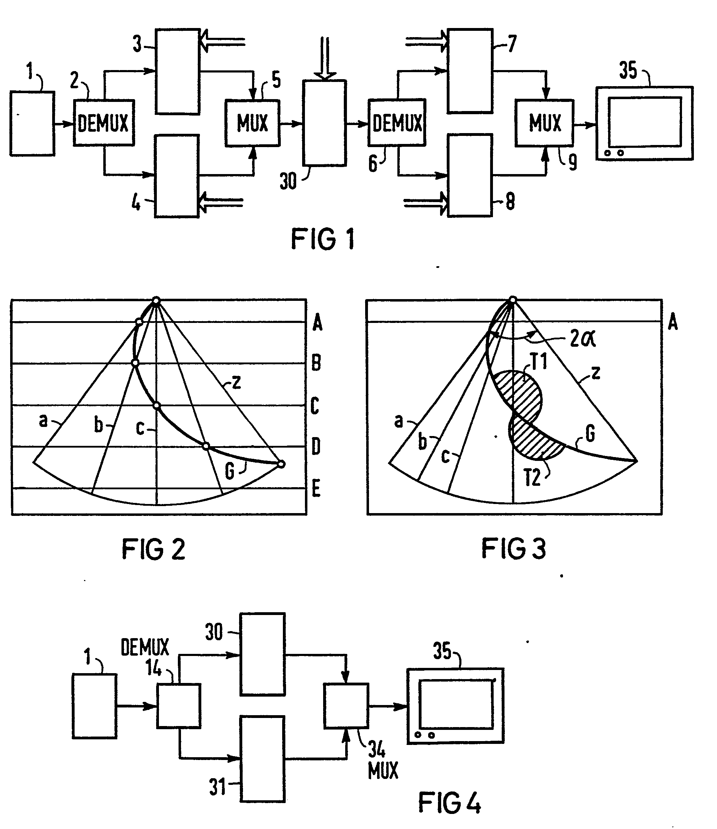

In Figur 1 ist ein Verfahren zur Darstellung von in Polarkoordinaten anfallenden, mittels eines Sektor-Scan-Verfahrens gewonnenen Ultraschall-Echosignalen dargestellt. Es wird davon ausgegangen, daß die Ultraschall-Echosignale in bekannter Weise von einem Ultraschall-Sende- und Empfangs-System 1 geliefert werden. Die Ultraschall-Echosignale werden einem ersten Demultiplexer 2 zugeführt, der sie nach dem bekannten Wechselpuffer-Verfahren abwechselnd an einen von zwei Wechselpuffer-Vektorspeichern 3, 4 weitergibt. Diese Wechselpuffer-Vektorspeicher 3, 4 sind eindimensional ausgeführt. Jeder Wechselpuffer-Vektorspeicher 3, 4 ist dabei nur imstande, Echo-Information von einer einzigen Abtast-Linie oder Abtastzeile aufzunehmen. Die Echo-Information einer solchen Abtastzeile wird hier als « Vektor » bezeichnet. Beim hier vorausgesetzten Sektor-Scan-Verfahren unterscheiden sich die einzelnen Abtastzeilen um vorgegebene Winkel-Inkremente. Die Ausgangssignale der beiden Wechselpuffer-Vektorspeicher 3, 4 werden über einen ersten Multiplexer 5 abwechselnd einem Bildspeicher 30 zugeleitet. Dieser Bildspeicher 30 ist zweidimensional aufgebaut und zur Aufnahme eines kompletten Ultraschall-Echobildes eingerichtet. Sein Inhalt wird über einen zweiten Demultiplexer 6 abwechselnd auf einen von zwei Wechselpuffer-Horizontalspeichern 7 und 8 ausgelesen. Auch diese Wechselpuffer-Horizontalspeicher 7, 8 sind eindimensional ausgeführt. Der Inhalt eines jeden Wechselpuffer-Horizontalspeichers 7, 8 entspricht jeweils einer Fernsehzeile. Die beiden Wechselpuffer-Horizontalspeicher 7, 8 werden im Wechselpuffer-Betrieb über einen zweiten Multiplexer 9 auf einen Monitor 35 eines Darstellungsgeräts gegeben. Dieser Monitor 35 erzeugt ein Fernsehbild, das genormt ist, beispielsweise mit 625 Zeilen und 50 Halbbildern pro Sekunde. Beim Auslesen wird der Inhalt der Wechselpuffer-Horizontalspeicher 7, 8 mit einem (nicht gezeigten) Synchronsignal zu einem fernsehnormgerechten Darstellungssignal zusammengesetzt.

Die Systemelemente 1 bis 9 sowie 30 werden durch eine nicht gezeigte Steuereinrichtung angesteuert. An den Speichern 3, 4, 7, 8 und 30 sind durch offene Pfeile Adreßsteuerungen angedeutet.

In den Figuren 2 und 3 ist schematisch für wenige Scanlinien oder Abtastzeilen das auf dem Bildschirm des Monitors 35 erscheinende Echobild dargeatellt. Es ist angenommen, daß ein kreisförmiges Objekt untersucht wird, welches sich von oben nach unten bewegt, z. B. das menschliche Herz während seiner Tätigkeit. Die einzelnen Abtast- oder Scanlinien sind mit a, b, c. .. z bezeichnet. Das Einschreiben erfolgt entlang der einzelnen Linien a, b, c. .. z. Die Datenakquisitionszeit bei jeder dieser Linien a,. .. z ist gleich groß, so daß sich eine sektorförmige Abtastung ergibt. Die Datenakquisitionszeit ist die Zeit, in der einer der beiden Wechselpuffer-Vektorspeicher 3, 4 jeweils zum Einschreiben zur Verfügung stehen muß. Das Auslesen erfolgt entlang der Zeilen des Bildspeichers 30. Solche Auslesezeilen sind in Figur 2 mit A, B, C, D und E bezeichnet. Die ausgelesenen Zeilen werden jeweils abwechselnd in einen der beiden Horizontalspeicher 7, 8 übertragen.

Mit G ist in Figur 2 und 3 eine sichelförmige Grenzlinie bezeichnet, die auf dem Bildschirm des Monitors 35 zwar im allgemeinen nicht sichtbar ist, die aber ein vorangehendes Echobild (an der rechten Seite gelegen) vom unmittelbar darauf akquirierten Echobild (links gelegen) trennt. Diese Grenzlinie G wird durch das gewählte quasi-orthogonale Speicherverfahren hervorgerufen. Wie sich aus Figur 3 ergibt, verursacht diese Grenzlinie G, daß das kreisförmige Objekt aufgrund seiner Bewegung in zwei Teilbildern T1, T2 dargestellt wird, und zwar in einem älteren Teilbild T1 und einem jüngeren Teilbild T2. Dieser Bewegungsartefakt wird dadurch hervorgerufen, daß das ältere und das jüngere Teilbild T1, T2 des kreisförmigen Objekts zu unterschiedlichen Zeitpunkten akquiriert wurden.

Bei diesem quasi-orthogonalen Speicherverfahren wird hier davon ausgegangen, daß immer eine vollständige Linie a, b, c,. .. z gespeichert und danach eine Zeile A, B. .. E ausgelesen wird. Abweichend davon könnte auch abwechselnd ein Teilstück einer Linie a, b, c. .. z eingeschrieben und ein Teilstück einer Zeile A, B. .. E oder aber die gesamte Zeile A, B. .. E ausgelesen werden. Im gezeigten Beispiel nach Figuren 2 und 3 erfolgt der Scan von links nach rechts. Dann wird beispielsweise in der Zeile B vom linken Rand bis zum Schnittpunkt mit dem Vektor b bereits neue Bildinformation dargestellt, während von diesem Schnittpunkt bis zum rechten Rand der Zeile B noch alte Bildinformation zur Darstellung gelangt. Der rechts gelegene Bildbereich ist ja von dem UltraschallScan noch nicht erfaßt worden.

In Figur 4 ist schematisch anhand von nur zwei Bildspeichern dargestellt, wie mit dem vorliegend definierten Speicherverfahren Bewegungsartefakte der aufgezeigten Art vermieden werden können. Danach ist hier das Ultraschall-Sende- und Empfangs-System 1 an einen Demultiplexer 14 angeschlossen. Dieser Demultiplexer 14 leitet die gewonnenen Ultraschall-Echosignale jeweils abwechselnd zu einem von zwei kompletten, zweidimensionalen Bildspeichern 30, 31 weiter. Diese Bildspeicher 30, 31 arbeiten hier selbst nach dem Wechselpuffer-Prinzip. Das heißt, daß die Ultraschall-Echosignale abwechselnd den beiden Bildspeichern 30, 31 dergestalt zugeführt werden, daß jeweils ein komplettes Ultraschall-Echobild in den betreffenden Bildspeicher (z. B. 30) eingeschrieben wird, und daß von dem jeweils anderen Bildspeicher (z. B. 31) gleichzeitig die dort gespeicherten Ultraschall-Echosignale eines kompletten zuvor eingeschriebenen Ultraschall-Echobildes über einen Multiplexer 34 zur Darstellung auf dem Monitor 35 gelangen. Das Auslesen erfolgt auch hier fernsehnormgerecht.

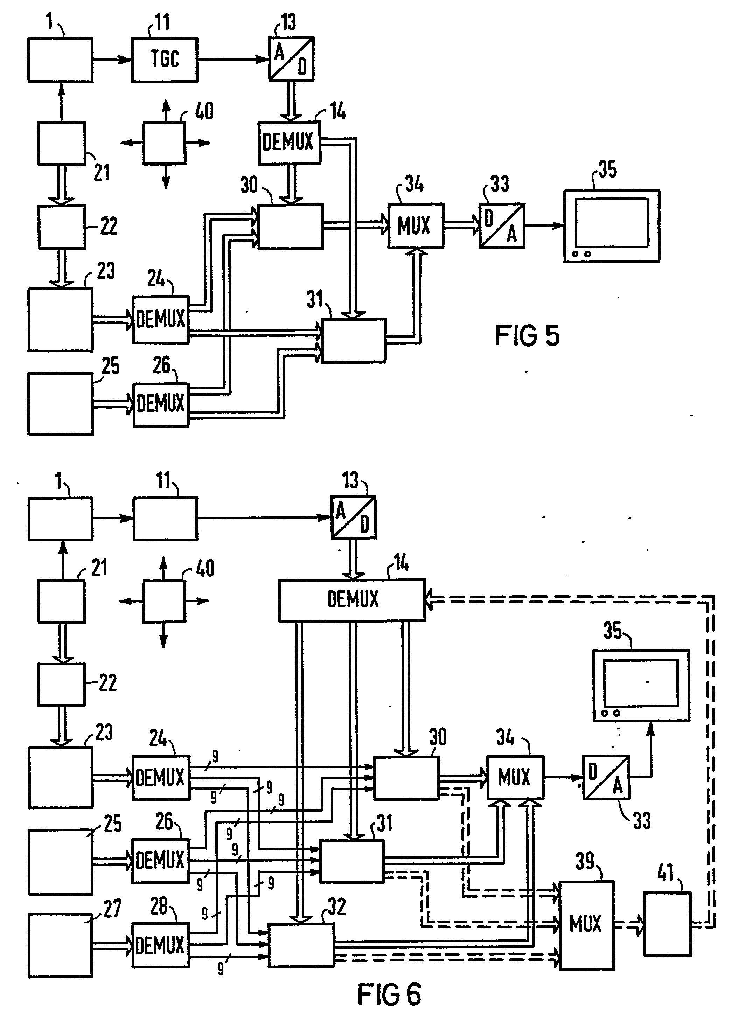

Die Vorrichtungen nach Figuren 5 und 6 sind prinzipiell ähnlich aufgebaut und werden zusammen beschrieben, wobei jeweils nur die Unterschiede herausgestellt werden. Für gleiche Einheiten sind identische Bezugszeichen gewählt.

In den Figuren 5 und 6 bedeutet 1 wieder ein UltraschallSende- und Empfangs-System, das einen mechanisch bewegbaren Sektor-Schallkopf oder eine lineare Anordnung von Ultraschallwandlern in einem Phased Array umfassen kann. Das Ultraschall-System 1 wird durch eine Steuereinheit 21 angesteuert. Die in Polarkoordinaten anfallenden Ultraschall-Echosignale gelangen über einen Tiefenausgleichsverstärker (TGC) 11 auf einen Analog/Digital-Wandler 13. Dessen Ausgangssignal ist über einen Demultiplexer 14 einem « digitalen Bildspeichersystem » zugeführt. Zur zentralen Steuerung dient eine Einheit 40.

In der Figur 5 besteht das « digitale Bildspeichersystem » aus nur zwei kompletten, zweidimensionalen Bildspeichern 30 und 31, die vollständige, beispielsweise kartesisch organisierte Speichermatrizen aufweisen. Die beiden Bildspeicher 30 und 37 arbeiten nach dem Prinzip des Wechselpuffers, d. h. es wird jeweils gleichzeitig abwechselnd in einen Bildspeicher eingeschrieben und aus dem anderen Bildspeicher ausgelesen. Beim Auslesen gelangen die Daten über einen Multiplexer 34 und einen Digital/Analog-Wandler 33 auf den Fernsehmonitor 35.

In der Figur 6 besteht demgegenüber das « Speichersystem » aus drei kompletten Bildspeichern 30, 31, 32. Diese drei Bildspeicher 30 bis 32 arbeiten ebenfalls im Wechselpufferbetrieb, wobei die Funktion der einzelnen Bildspeicher 30-32 zyklisch umläuft. Das bedeutet im einzelnen, daß jeweils gleichzeitig abwechselnd ein Bildspeicher beschrieben, ein Bildspeicher ausgelesen und jeweils an den Daten des verbleibenden Bildspeichers eine Bildverarbeitung durchgeführt wird. Dies ist gestrichelt durch einen Multiplexer 39 und eine nachgeschaltete Verarbeitungseinrichtung 41 angedeutet. Die verarbeiteten Daten können z. B. wieder in denselben Bildspeicher, aus dem sie entnommen wurden, eingeschrieben werden. Das ist durch die Führung der Ausgangsleitung der Verarbeitungseinheit 41 angedeutet. Sie führt zum Demultiplexer 14, der die Signalweitergabe an den « richtigen » Bildspeicher organisiert.

Bei Bedarf können auch mehr als drei Bildspeicher 30 bis 31 vorhanden sein, wobei die Funktion des zyklischen Wechselbetriebes gleich bleibt.

Für das wechselweise Einschreiben und Auslesen (sowie für die Bildverarbeitung der aus den Bildinformationen akquirierten Daten nach Fig. 6) sind Adreßsteuereinheiten 23, 25 und 27 vorhanden. Den Adreßsteuereinheiten 23, 25 und 27 sind jeweils Demultiplexer 24, 26 bzw. 28 nachgeschaltet, die die Aufteilung der Adressen gemäß den Betriebszuständen (Einschreiben, Auslesen, Bildverarbeitung) der Bildspeicher 30, 31 und 32 bewirken.

Zusätzlich ist der Steuereinheit 21 eine Einheit 22 für eine winkelabhängige Steuerung der Einschreibadressensteuereinheit 23 nachgeschaltet. Die Daten werden damit in eine winkelabhängige Imformation vorbestimmter funktionaler Abhängigkeit gewandelt. Diese Abhängigkeit kann insbesondere durch die Funktion $1/\cos \alpha$ gegeben sein, wobei $2 \alpha$ der gesamte Sektorwinkel ist, s. Figur 3. Einzelheiten sind in der deutschen Anmeldung DE-A-32 47 772 dargestellt. Durch die Umwandlung wird u. a. eine Datenreduktion bewirkt.

Bei beiden Figuren 5 und 6 steuert die Einheit 22 unmittelbar die Adreßsteuereinheit 23 für das Einschreiben der Daten, d. h. also, die Daten werden hier geometrisch korrekt in jeweils einen der Bildspeicher 30 bis 32 eingeschrieben.

Wie bereits dargelegt, wird bei Figur 6 jeweils am Inhalt des Bildspeichers, der gerade weder beschrieben noch ausgelesen wird, eine Bildverarbeitung oder Datenmanipulation vorgenommen. Dabei können die in dem betreffenden Bildspeicher enthaltenen Ultraschall-Echosignale z. B. zweidimensional gefiltert werden. Bei Figur 5 kann eine Datenmanipulation über die Adreßsteuereinheit 25 beim Auslesen durchgeführt werden.

Bei den beschriebenen Ausführungsbeispielen werden also jeweils wenigstens drei komplette Bildspeicher benötigt, um eine Bildverarbeitung durchzuführen. Solche Bildspeicher müssen mit hoher Geschwindigkeit arbeiten und eine genügend große Speicherkapazität haben. Da inzwischen schnelle Speicherbausteine ausreichend hoher Kapazität auf dem Markt angeboten werden, ist diese Problemlösung mit vertretbarem Aufwand realisierbar. Insgesamt ergeben sich im Vergleich zu früher realisierten Lösungen, bei denen ein Vektorspeicher, ein Bildspeicher sowie ein Horizontalspeicher notwendig waren, Vorteile. Diese Vorteile sind in der Vereinfachung des Verfahrens zu sehen, wodurch der Gesamtaufwand der zugehörigen Vorrichtung verringert wird. Durch die Möglichkeit einer umfassenden Bildverarbeitung, und durch die Vermeidung der unerwünschten sichelförmigen Trennlinie beim Sektorscan wird die Qualität der resultierenden Bilddarstellung entscheidend erhöht.

**Patentansprüche**

1. Verfahren zur Echtzeit-Darstellung von in Polarkoordinaten anfallenden, mittels einer Sektor-Scan-Technik gewonnenen Ultraschall-Echosignalen, bei dem die Echosignale jeweils einem von mindestens drei zweidimensionalen Bildspeichern (30, 31, 32) in solcher Weise zugeführt werden, daß die einzelnen Bildspeicher der Reihe nach jeweils mit einem kompletten, geometrisch korrekten Ultraschall-Echobild des abgetasteten Sektors beschrieben werden, bei dem weiter gleichzeitig mit der Einschreibung eines Ultraschall-Echobildes in einen der Bildspeicher das in einem der anderen Bildspeicher enthaltene Ultraschall-Echobild auf einen Monitor (35) fernsehnormgerecht ausgelesen wird, während die in den übrigen Bildspeichern enthaltenen Ultraschall-Echobilder mittels einer Signalverarbeitungseinrichtung (41) verarbeitet werden, und bei dem die Rollen der Bildspeicher (30, 31, 32) zyklisch vertauscht werden.

2. Verfahren nach Anspruch 1, dadurch gekennzeichnet, daß die Ultraschall-Echosignale in der Signalverarbeitungseinrichtung (41) zweidimensionl gefiltert werden.

3. Vorrichtung zur Durchführung des Verfahrens nach Anspruch 1 oder 2 mit einem Ultraschall-Sende- und Empfangssystem (1), mit einer Einheit (21) zur Sektor-Scan-Steuerung, mit einem AnalogDigital-Wandler (13) zur Umsetzung der von dem Ultraschall-Sende- und Empfangssystem (1) gelieferten Echosignale in digitale Bildsignale, mit einem ersten und einem zweiten Bildspeicher (30, 31) mit je einer Speichermatrix, die zur Aufnahme der digitalen Bildsignale eines kompletten Ultraschall-Echobildes eingerichtet sind, mit einem Digital-Analog-Wandler (33) zur Umsetzung der gespeicherten digitalen Bildsignale in analoge Bildsignale, mit einem an den Digital-Analog-Wandler (33) angeschlossenen Monitor (35) zur Darstellung der gespeicherten Bildsignale in einem Ultraschall-Echobild, und mit den Bildspeichern (30, 31) zugeordneten Adreßsteuereinheiten (23, 25), dadurch gekennzeichnet,

daß ein weiterer zweidimensionaler Bildspeicher (32) vorgesehen ist, der ebenfalls eine Speichermatrix zur Aufnahme eines kompletten Ultraschall-Echobildes sowie eine Adreßsteuereinheit (27) aufweist,

daß eine Signalverarbeitungsvorrichtung (41) vorgesehen ist,

daß die Bildspeicher (30, 31, 32) eingangsseitig über einen ersten Demultiplexer (14) mit dem Ausgang des Analog-DigitalWandlers (13) und weiterhin ausgangsseitig zum einen über einen ersten Multiplexer (34) mit dem Monitor (35) und zum anderen über einen zweiten Multiplexer (39) mit der Signalverarbeitungseinrichtung (41) verbunden sind,

daß jeder Bildspeicher (30, 31, 32) von jeder Adreßsteuereinheit (23, 25, 27) über jeweils einen jeder Adreßsteuereinheit zugeordneten zweiten Demultiplexer (24, 26, 28) adressierbar ist, und

daß eine zentrale Steuereinheit (40) vorgesehen ist, über die die Adreßsteuereinheiten (23, 25, 27), die Demultiplexer (14, 24, 26, 28) und die Multiplexer (34, 39) so gesteuert sind, daß in jeweils einen der Bildspeicher (30, 31, 32) ein komplettes Ultraschall-Echobild eingespeichert wird, während gleichzeitig das in einem der beiden übrigen Bildspeicher enthaltene Echobild auf den Monitor (35) ausgelesen wird und das in dem anderen der beiden übrigen Bildspeicher enthaltene Echobild der Signalverarbeitungseinrichtung (41) zugeführt wird, wobei die Rollen der Bildspeicher (30, 31, 32) zyklisch vertauscht werden.

4. Vorrichtung nach Anspruch 3, dadurch gekennzeichnet, daß der Einheit (21) für die Sektor-Scan-Steuerung eine Einheit (22) zur Wandlung der in den Polarkoordinaten enthaltenen Winkeldaten in eine vom Sektor-Scan-Winkel ($2\alpha$) abhängige Information nachgeschaltet ist.

## Claims

1. Method for the real time display of ultrasonic echo signals presenting themselves in polar coordinates and obtained by means of a sector-scan technique, wherein the echo signals are respectively supplied to one of at least three two-dimensional image memories (30, 31, 32) in such a manner that the individual image memories are inscribed in sequence in each case with a complete, geometrically correct ultrasonic echo image of the scanned sector, wherein further, at the same time as an ultrasonic echo image is inscribed into one of the image memories, the ultrasonic echo image contained in one of the other image memories is read out on to a monitor (35) in television standard form, while the ultrasonic echo images contained in the remaining image memories are processed by means of a signal processing device (41), and wherein the roles of the image memories (30, 31, 32) are interchanged cyclically.

2. Method according to claim 1, characterised in that the ultrasonic echo signals are twodimensionally filtered in the signal processing device (41).

3. Device for implementing the method according to claim 1 or 2 with an ultrasonic transmitting and receiving system (1), with a unit (21) for sector-scan-control, with an analogue-to-digital converter (13) to convert the echo signals supplied by the ultrasonic transmitting and receiving system (1) into digital image signals, with a first and a second image memory (30, 31) each with a memory matrix arranged to record the digital image signals of a complete ultrasonic echo image, with a digital-to-analogue converter (33) to convert the stored digital image signals into analogue image signals, with a monitor (35) connected to the digital-to-analogue converter (33) to display the stored image signals in an ultrasonic echo image, and with address control units (23, 25) assigned to the image memories (30, 31), characterised

in that a further two-dimensional image memory (32) is provided which similarly has a memory matrix to record a complete ultrasonic echo image and an address control unit (27),

in that a signal processing device (41) is provided, in that the image memories (30, 31, 32) are connected on their input side via a first demultiplexer (14) to the output of the analogue-to-digital converter (13) and are further connected on the output side to the monitor (35) via a first multiplexer (34), on the one hand, and to the signal processing device (41) via a second multiplexer (39) on the other hand,

in that each image memory (30, 31, 32) can be addressed by each address control unit (23, 25, 27) in each case via a second demultiplexer (24, 26, 28) assigned to each address control unit, and

in that there is provided a central control unit (40) via which the address control units (23, 25, 27), the demultiplexers (14, 24, 26, 28) and the multiplexers (34, 39) are controlled such that a complete ultrasonic echo image is stored in one of the image memories (30, 31, 32) respectively, while at the same time the echo image contained in one of the two remaining image memories is read out on to the monitor (35) and the echo image contained in the other image memory of the two remaining is supplied to the signal processing device (41), the roles of the image memories (30, 31, 32) interchanging in a cyclical manner.

4. Device according to claim 3, characterised in that a unit (22) is connected in series with the unit (21) for the sector-scan-control to convert the angle data contained in the polar coordinates into information dependent on the sector-scan-angle (2α).

## Revendications

1. Procédé pour la représentation en temps réel de signaux d'échos ultrasonores, se présentant en forme de coordonnées polaires, obtenus au moyen d'une technique de balayage par secteurs, selon lequel les signaux d'échos sont amenés chaque fois à l'une d'au moins trois mémoires d'image (30, 31, 32) bidimensionnelles, de manière que les différentes mémoires d'image soient inscrites l'une après l'autre, chacune avec une image d'écho ultrasonore complète, géométriquement correcte, du secteur exploré, selon lequel, en plus, en même temps qu'une image d'écho ultrasonore est inscrite dans l'une des mémoires d'image, l'image d'écho ultrasonore contenue dans l'une des autres mémoires d'image est lue et représentée selon les normes de la télévision sur un écran de contrôle (35), tandis que les images d'écho ultrasonore contenues dans les mémoires d'image restantes sont traitées au moyen d'un dispositif de traitement de signaux (41), et selon lequel les rôles des mémoires d'image (30, 31, 32) sont intervertis cycliquement.

2. Procédé selon la revendication 1, caractérisé en ce que les signaux d'échos ultrasonores sont soumis à un filtrage bidimensionnel dans le dispositif de traitement de signaux (41).

3. Appareil pour la mise en oeuvre du procédé selon la revendication 1 ou 2, comprenant un système (1) d'émission et de réception d'ultrasons, une unité (21) pour la commande du balayage des secteurs, un convertisseur analogique-numérique pour transformer des signaux d'échos fournis par le système d'émission et de réception ultrasonore en signaux d'image numériques, une première et une deuxième mémoire d'image (30, 31), possédant chacune une matrice de mémoire, les matrices de mémoire étant agencées pour la réception des signaux d'image numériques d'une image d'écho ultrasonore complète, un convertisseur numérique-analogique (33) pour transformer les signaux d'image numériques mémorisés en signaux d'image analogiques, un récepteur de télévision (35) raccordé au convertisseur numérique-analogique (33) pour la représentation des signaux d'image mémorisés dans une image d'écho ultrasonore, de même que des unités de commande d'adresse (23, 25) coordonnées aux mémoires d'image (30, 31), caractérisé en ce que

il comprend une mémoire d'image bidimensionnelle supplémentaire (32), possédant également une matrice de mémoire pour la réception d'une image d'écho ultrasonore complète, ainsi qu'une unité de commande d'adresse (27),

il comprend un dispositif de traitement de signaux (41),

les mémoires d'image (30, 31, 32) sont reliées, côté entrée, à travers un premier démultiplexeur (14), à la sortie du convertisseur analogique-numérique (13) et sont reliées, en plus, côté sortie, d'une part au récepteur de télévision (35) à travers un premier multiplexeur (34) et d'autre part au dispositif de traitement de signaux (41) à travers un deuxième multiplexeur (39),

chaque mémoire d'image (30, 31, 32) est adressable par chaque unité de commande d'adresse (23, 25, 27) à travers l'un de plusieurs deuxièmes démultiplexeurs (24, 26, 28), coordonnés chacun à l'une des unités de commande d'adresse, et

il comprend une unité de commande centrale (40) par laquelle les unités de commande d'adresse (23, 25, 27), les démultiplexeurs (14, 24, 26, 28) et les multiplexeurs (34, 39) sont commandés de manière que, à chaque moment, une image d'écho ultrasonore complète soit mémorisée dans une des mémoires d'image (30, 31, 32) et que, en même temps, l'image d'écho contenue dans l'une des deux mémoires d'image restantes soit lue et représentée sur le récepteur de télévision (35) et l'image d'écho contenue dans l'autre des deux mémoires d'image restantes soit amenée au dispositif de traitement de signaux (41), avec interversion cyclique des rôles des mémoires d'image (30, 31, 32).

4. Appareil selon la revendication 3, caractérisé en ce que l'unité (21) pour la commande du balayage des secteurs est suivie d'une unité (22) pour transformer les données d'angle contenues dans les coordonnées polaires en une information qui est fonction de l'angle de balayage (20) d'un secteur.

FIG 1

FIG 2

FIG 3

FIG 4

1

EP 0 120 335 B1

FIG 5

FIG 6

2